# EUROPÄISCHE PATENTSCHRIFT

(11) **EP 0 524 513 B1**
(45) Veröffentlichungstag und Bekanntmachung des Hinweises auf die Patenterteilung: **15.02.1995**
(21) Anmeldenummer: 92111862.6
(22) Anmeldetag: 11.07.1992
(51) Int. Cl.: C08F 14/00, C08F 2/22, C08F 14/06, C08K 13/02, C08L 27/06

(54) **Wässrige Polymerisatdispersionen**
Aqueous polymer dispersions
Dispersions polymères aqueuses

(30) Priorität: 26.07.1991 DE 4124819
(43) Veröffentlichungstag der Anmeldung: 27.01.1993
(73) Patentinhaber: BASF Aktiengesellschaft, 67063 Ludwigshafen (DE)
(72) Erfinder: Grubert, Heinrich, Dr., W-6900 Heidelberg (DE); Dersch, Rolf, Dr., W-6730 Neustadt (DE); Neutzner, Josef, Dr., W-6730 Neustadt (DE); Hummerich, Rainer, Dr., W-6520 Worms 27 (DE); Claassen, Peter Joseph Maria W., NL-6902 Al Zevenaar (NL)

(56) Entgegenhaltungen:
- FR-A- 2 316 251
- GB-A- 1 570 178
- DATABASE CHEMICAL ABSTRACTS (HOST: STN): CA80(8):37934k, Colombus, Ohio, US; & JP-A-47046445

## Beschreibung

Die vorliegende Erfindung betrifft wäßrige Polymerisatdispersionen, die dadurch erhältlich sind, daß man ein Monomerengemisch, daß 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von Guanidin auf einen Wert von 5 bis 10 einstellt, wobei die Zugabe des Guanidins vor, während und/oder nach der Emulsionspolymerisation erfolgen kann, und bezogen auf das Monomerengemisch, 0,005 bis 1 Gew.-% wenigstens einer Wirksubstanz aus der Gruppe Glycerin, Pivalinsäure, Paraldehyd, 2,6-Di-tert.-butyl-p-kresol, Benzophenon, alkylsubstituierte Benzophenone, Thioschwefelsäure und ihre Salze, Oxalsäure und ihre Salze, Benzaldehyd, Derivate des Benzaldehyds, die am aromatischen Kern einen oder zwei C₁- bis C₄-Alkylreste aufweisen, Benzylalkohol, Campher, Ester aus Ameisensäure und C₃- bis C₆-Alkanolen, C₁₀- bis C₂₂-ungesättigte Fettsäuren, Tetraalkylorthosilicate mit 1 bis 4 C-Atome aufweisenden Alkylresten, Bis(4-hydroxyphenyl)sulfon und Zitronensäure zusetzt, wobei die Zugabe dieser Wirksubstanzen vor, während und/oder nach der Emulsionspolymerisation erfolgen kann.

Wäßrige Polymerisatdispersionen mit im Polymeranteil eingebauten halogenhaltigen Monomeren eignen sich in vielfältiger Weise als Bindemittel, insbesondere dort, wo auf erhöhte Brandsicherheit Wert gelegt wird, da ihre Verfilmungen eine reduzierte Neigung zum Entflammen aufweisen.

Es ist bekannt, daß die wäßrige Phase von ohne basische Hilfsmittel hergestellten wäßrigen Polymerisatdispersionen in der Regel einen pH-Wert < 5 aufweist, was sich für zahlreiche Verwendungen nachteilig auswirkt, so daß der pH-Wert im allgemeinen durch Zusatz basischer Mittel erhöht wird.

Aus der DE-A 2 246 499 ist bekannt, daß sich ursprünglich weiße Dispersionen mit einpolymerisiertem Vinylchlorid und/oder Vinylidenchlorid im Polymerisatanteil durch Zugabe basischer Stoffe braun verfärben, und daß dieses Verfärben durch Zusatz geringer Mengen wenigstens einer Epoxidverbindung im wesentlichen unterdrückt werden kann. Nachteilig an einem Zusatz von Epoxiden ist jedoch, daß Epoxide auf den Polymerisatanteil der wäßrigen Dispersion gleichzeitig vernetzend wirken.

Die ältere Anmeldung EP-A-469 405 betrifft sich im wesentlichen nicht verfärbende wäßrige Polymerisatdispersionen, die dadurch erhältlich sind, daß man ein Monomerengemisch, das 10 bis 100 Gew.-% an halogenhaltigen Monomeren enthält, in Gegenwart von 0,5 bis 6 Gew.-%, bezogen auf das Monomerengemisch, an ausschließlich anionischen und/oder nichtionischen grenzflächenaktiven Substanzen nach der Methode der radikalischen Emulsionspolymerisation in wäßrigem Medium polymerisiert und den pH-Wert der wäßrigen Phase der dabei anfallenden wäßrigen Polymerisatdispersion durch Zugabe von von Ammoniak sowie von primären und sekundären Aminen verschiedenen basischen Mitteln auf einen Wert von 5 bis 10 einstellt. Nachteilig an diesen Dispersionen und ihren Verfilmungen ist, daß ihr Verfärbungsverhalten als Funktion der Zeit nicht voll zu befriedigen vermag.

Die ältere Anmeldung EP-A-469 397 betrifft sich nicht verfärbende wäßrige Polymerisatdispersionen, die dadurch erhältlich sind, daß man ein Monomerengemisch, das 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von von Ammoniak sowie von primären und sekundären Aminen verschiedenen basischen Mitteln auf einen Wert von 5 bis 10 einstellt und, bezogen auf das Monomerengemisch, 0,005 bis 1 Gew.-% wenigstens einer Wirksubstanz aus der Gruppe Glycerin, Pivalinsäure, Paraldehyd, 2,6-Di-tert.-butyl-p-kresol, Benzophenon, alkylsubstituierte Benzophenone, Thioschwefelsäure und ihre Salze sowie Oxalsäure und ihre Salze zusetzt, wobei Thioschwefelsäure und ihre Salze mit besonderem Vorteil als Wirksubstanz empfohlen werden.

Die GB-A 1570178 betrifft Zusammensetzungen aus PVC und einem Guanidin. Die N-enthaltenden Produkte wie Guanidin werden "Stabilisatoren" genannt und spielen eine Rolle gegen Verfärbung.

Aufgabe der vorliegenden Erfindung war daher, wäßrige Polymerisatdispersionen mit einpolymerisierten halogenhaltigen Monomeren im Polymerisatanteil zur Verfügung zu stellen, deren pH-Wert durch Zusatz eines basischen Mittels auf einen Wert von 5 bis 10 eingestellt wird und die ebenso wie ihre Verfilmungen in befriedigender Weise auch nach längerer Lagerung im wesentlichen keine Verfärbung aufweisen.

Demgemäß wurden die eingangs definierten wäßrigen Polymerisatdispersionen gefunden. Dabei wurde gefunden, daß die Verfärbungsneigung der erfindungsgemäßen wäßrigen Polymerisatdispersionen über die Wirkung von Guanidin hinaus dadurch reduziert wird, daß man, bezogen auf das Monomerengemisch, 0,005 bis 1, vorzugsweise 0,05 bis 0,5 Gew.% wenigstens einer Wirksubstanz aus der Gruppe Glycerin, Pivalinsäure, Paraldehyd, 2,6-Di-tert.-butyl-p-kresol, Benzophenon, alkylsubstituierte Benzophenone, Thioschwefelsäure und ihre Salze, Oxalsäure und ihre Salze, Benzaldehyd, Derivate des Benzaldehyds die am aromatischen Kern einen oder zwei C₁- bis C₄-Alkylreste aufweisen, Benzylalkohol, Campher, Ester aus Ameisensäure und C₃- bis C₆-Alkanolen, C₁₀- bis C₂₂-ungesättigte Fettsäuren, Tetraalkylorthosilicate mit 1 bis 4 C-Atome aufweisenden Alkylresten, Bis(4-hydroxyphenyl)sulfon, Zitronensäure und deren Salze sowie Salze des Guanidins mit organischen und anorganischen Säuren zusetzt, wobei die Zugabe dieser Wirksubstanzen vor, während und/oder nach der Emulsionspolymerisation erfolgen kann. Besonders harte Weißtöne weisen die Dispersionen auf, denen Natriumthiosulfat, Benzaldehyd, Campher, Benzylalkohol, der Ester aus Ameisensäure und n-Butanol, ölsäure, Tetraethylorthosilicat, Bis(4-hydroxyphenyl)sulfon, Zitronensäure oder ein Gemisch dieser Wirksubstanzen zugesetzt wird, wobei man unter diesen Wirkstubstanzen wiederum Zitronensäure mit besonderem Vorteil zusetzt.

Bevorzugte halogenhaltige Monomere sind Vinylbromid, Vinylchlorid und Vinylidenchlorid, unter denen Vinylchlorid und Vinylidenchlorid besonders bevorzugt werden. Als Comonomere eignen sich beispielsweise Ester der Acryl- oder Methacrylsäure mit 1 bis 10 C-Atome enthaltenden aliphatischen Alkoholen, wobei die Methyl-, Ethyl-, Isopropyl-, n-, iso- und tert.-Butyl-, n-Hexyl- sowie 2-Ethylhexylester bevorzugt sind. Ferner eignen sich als Comonomere α,β-monoethylenisch ungesättigte Carbonsäuren wie Acryl- und Methacrylsäure, Vinylester niederer Alkancarbonsäuren wie Vinylacetat und Vinylpropionat, Nitrile von niederen α,β-monoethylenisch ungesättigten Carbonsäuren wie Acrylnitril und Methacrylnitril sowie die Amide dieser Carbonsäuren, Acrylsäure- oder Methacrylsäureester mit niederen mehrwertigen Alkoholen, ungesättigte Sulfon- und Phosphonsäuren, aber z.B. auch niedere einfach- oder mehrfach ungesättigte Kohlenwasserstoffe wie Ethylen, Propen und Butadien. Vorzugsweise enthält das zu polymerisierende Monomerengemisch, bezogen auf die Gesamtmenge der Monomeren, 20 bis 90 Gew.-% an halogenhaltigen Monomeren.

Geeignete Polymerisationsinitiatoren sind vor allem anorganische Peroxide wie Natrium-, Kalium- oder Ammoniumperoxidisulfat und Wasserstoffperoxid. Ferner eignen sich Azoverbindungen wie 2,2'-Azobisisobutyronitril sowie organische Peroxide wie Dibenzoylperoxid, t-Butylperpivalat oder Hydroperoxide wie t-Butylhydroperoxid, aber auch kombinierte Systeme, die aus wenigstens einem organischen Reduktionsmittel und wenigstens einem Peroxid und/oder Hydroperoxid zusammengesetzt sind, z.B. t-Butylhydroperoxid und das Na-Salz der Hydroxymethansulfinsäure, sowie kombinierte Systeme, die darüberhinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/-Natriumperoxidisulfat, wobei anstelle von Ascorbinsäure auch häufig das Na-Salz der Hydroxymethansulfinsäure, Natriumsulfit, Natriumhydrogensulfit oder Natriummetabisulfit eingesetzt werden.

Die für die Emulsionspolymerisation eingesetzte Menge an Polymerisationsinitiatoren wird vorzugsweise niedrig gehalten und liegt, bezogen auf die Monomeren, in der Regel bei 0,05 bis 1 Gew.-%, vorzugsweise beträgt ihr Anteil 0,1 bis 0,3 Gew.-%. Weniger bevorzugt sind Mengen von bis zu 10 Gew.-%.

Als Emulgatoren können sowohl anionische, kationische als auch nichtionische Emulgatoren sowie verträgliche Mischungen derselben eingesetzt werden. Bezogen auf das Gesamtgewicht der zu polymerisierenden Monomeren beträgt ihr Gewichtsanteil in der Regel 0,05 bis 10 Gew.-%. Mit besonderem Vorteil werden ausschließlich nichtionische und anionische Emulgatoren sowie deren Gemische verwendet.

Vorzugsweise eingesetzte nichtionische Emulgatoren sind ethoxylierte Alkanole (EO-Grad: 2 bis 100, Alkylrest: C₈ bis C₃₆), ethoxylierte 1 bis 4 olefinische Doppelbindungen enthaltende Alkohole (EO-Grad: 2 bis 100, Kettenlänge: C₈ bis C₃₆), ethoxylierte mono-, di- oder tri-Alkylphenole oder -naphthole (EO-Grad: 2 bis 100, Alkylrest: C₄ bis C₃₆), ethoxylierte aliphatische Monocarbonsäuren (EO-Grad: 6 bis 50, Alkylrest: C₈ bis C₂₄) und ethoxylierte 1 bis 4 olefinische Doppelbindungen enthaltende Monocarbonsäuren (EO-Grad: 6 bis 50, Alkylrest: C₈ bis C₂₄).

In vorteilhafter Weise eingesetzte anionische Emulgatoren sind die Alkalimetall- und Ammoniumsalze der sulfatierten Derivate von 6 bis 18 C-Atome enthaltenden Alkanolen, 6 bis 18 C-Atome und 1 bis 4 olefinische Doppelbindungen enthaltenden Alkoholen, ethoxylierten Alkanolen (EO-Grad: 4 bis 30, Alkylrest: C₁₂ bis C₁₈), ethoxylierten 1 bis 4 olefinische Doppelbindungen enthaltenden Alkoholen (EO-Grad: 4 bis 30, Alkylrest: C₁₂ bis C₁₈) und von ethoxylierten Alkylphenolen (EO-Grad: 4 bis 30, Alkylrest: C₈ bis C₁₄), die Alkalimetall- und Ammoniumsalze gesättigter und ungesättigter Carbonsäuren (Kettenlänge: C₈ bis C₂₄), die Alkalimetall- und Ammoniumsalze von 12 bis 18 C-Atome enthaltenden Alkylsulfonsäuren sowie die entsprechenden Salze von Alkylarylsulfonsäuren (Alkylrest: C₁₀ bis C₁₈) und von Estern der Sulfobernsteinsäure mit 4 bis 18 C-Atomen enthaltenden Alkoholen.

Neben Emulgatoren können auch Schutzkolloide als grenzflächenaktive Substanzen bei der Emulsionspolymerisation mitverwendet werden. Geeignete Schutzkolloide sind z.B. hochmolekulare Verbindungen wie Polyvinylalkohole, Polyvinylpyrrolidone, Cellulosederivate, Polyacrylamide, Polymethacrylamide, Polycarbonsäuren oder deren Alkalimetall- oder Ammoniumsalze. Weiterhin können im Rahmen der Emulsionspolymerisation auch das Molekulargewicht regelnde Substanzen mitverwendet werden.

Vorzugsweise werden solche Initiatoren und grenzflächenaktiven Substanzen eingesetzt, die keine Ammoniumionen enthalten.

Die Emulsionspolymerisationstemperatur beträgt in der Regel 30 bis 90°C. Besonders an Verfärbungen freie erfindungsgemäße Dispersionen werden jedoch dann erhalten, wenn die Emulsionspolymerisationstemperatur 30 bis 70°C beträgt. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Chargenprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen einer oder mehrere die Monomeren in reiner oder in emulgierter Form enthalten, kontinuierlich, stufenweise oder unter Überlagerung eines Konzentrationsgefälles zuführt. Der Feststoffgehalt der so erhältlichen wäßrigen Polymerisatdispersion beträgt im allgemeinen 5 bis 60 Gew.-%.

überraschenderweise weisen sowohl die erfindungsgemäßen wäßrigen Polymerisatdispersionen als auch deren Verfilmungen, auch nach längerer Lagerung, keine Verfärbung auf.

### Beispiele

### a) Herstellung von Ausgangsdispersionen D 1 bis D 8

- D 1:: Eine Mischung aus 25 kg Wasser, 0,02 kg Emulgator I, 0,03 kg Natriumperoxidisulfat (Na₂S₂O₈) und 0,0005 kg Eisen(II)sulfat-Heptahydrat (FeSO₄ · 7 H₂O) wurde auf die Polymerisationstemperatur von 50°C erhitzt und mit 5 % eines Zulaufs 1 sowie 5 % eines Zulaufs 2 versetzt und während 15 min bei 50°C gehalten. Anschließend wurden unter Aufrechterhaltung der Polymerisationstemperatur synchron die verbliebene Menge an Zulauf 1 sowie die verbliebene Menge an Zulauf 2 und ein Zulauf 3 während 3,5 h kontinuierlich zugesetzt. Danach wurden ebenfalls bei 50°C während 30 min ein Zulauf 4 und während 1 h ein Zulauf 5 kontinuierlich zugeführt. Nachfolgend wurde unter Zugabe einer Mischung aus 0,12 kg einer 70 gew.-%igen wäßrigen-alkoholischen Lösung von t-Butylhydroperoxid und 0,05 kg Emulgator I in 0,35 kg Wasser und anschließender Zugabe von 0,17 kg des Na-Salzes der Hydroxymethansulfinsäure in 0,35 kg Wasser bei Raumtemperatur nachpolymerisiert.
- Zulauf 1:: 55 kg Vinylchlorid
10 kg Vinylpropionat
35 kg n-Butylacrylat
1,7 kg Emulgator II
0,78 kg Emulgator I und
41 kg Wasser
- Zulauf 2:: 0,003 kg Na-Salz der Hydroxymethansulfinsäure
0,125 kg Natriumacetat und
14 kg Wasser
- Zulauf 3:: 0,162 kg Natriumperoxidisulfat und
12 kg Wasser
- Zulauf 4:: 0,048 kg Natriumperoxidisulfat und
4 kg Wasser
- Zulauf 5:: 0,0018 kg Na-Salz der Hydroxymethansulfinsäure
0,0273 kg Natriumacetat und
4 kg Wasser
- Emulator I:: Na-Salz des sulfatierten Derivats von ethoxyliertem iso-Octylphenol (EO-Grad: 25)
- Emulgator II:: ethoxyliertes iso-Octylphenol (EO-Grad: 25)
- D 2 bis D 4:: Wie D 1, jedoch wurde die Emulsionspolymerisation in der genannten Abfolge anstelle von 50°C bei 60, 70 sowie 80°C durchgeführt.
- D 5 bis D 8:: In der genannten Abfolge wie D 1 bis D 4, jedoch wurde die Menge an eingesetztem Natriumperoxidisulfat jeweils um 50 % erhöht.

### b) Zusatz von Guanidin sowie von Wirksubstanzen zu den Dispersionen D 1 bis D 8 und Überprüfung auf Verfärbung

Der pH-Wert der wäßrigen Phase der Dispersionen D 1 bis D 8 wurde durch Zusatz von Guanidin auf einen Wert von 8 erhöht. Anschließend wurde ein Teil dieser Dispersionen so belassen und zu dem anderen Teil jeweils 0,1 Gew.-%, bezogen auf den Feststoffgehalt dieses Teils, der nachfolgenden Wirksubstanz zugesetzt und die Verfärbung nach 10-tägigem Stehen visuell beurteilt:
Glycerin, Pivalinsäure, Paraldehyd, 2,6-Di-tert.-butyl-p-kresol, Benzophenon, Natriumoxalat, Natriumthiosulfat, Benzaldehyd, Campher, Benzylalkohol, Ester aus Ameisensäure und n-Butanol, Ölsäure, Tetraethylorthosilicat, Bis(4-hydroxyphenyl)sulfon und Zitronensäure.

Es trat in allen Fällen keine Verfärbung auf. Den härtesten Weißton wies die Dispersion auf, die Zitronensäure als zusätzliche Wirksubstanz enthielt. Bei der Verwendung von Ammoniak als basisches Mittel trat in einem Vergleichsversuch eine deutliche Gelbfärbung auf.

Anschließend wurden dieselben Dispersionen frisch hergestellt und verfilmt, im Trockenschrank bei 50°C 14 Tage gelagert und wieder visuell beurteilt. Die Ergebnisse entsprachen jenen für den flüssigen Zustand, d.h. die Härte des Weißtons wurde durch den Zusatz der Wirksubstanzen noch etwas verstärkt, wobei Zitronensäure die stärkste Wirkung erzielte.

## Patentansprüche

1. Wäßrige Polymerisatdispersionen, dadurch erhältlich, daß man ein Monomerengemisch, das 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von Guaridin auf einen Wert von 5 bis 10 einstellt, wobei die Zugabe des Guanidins vor, während und/oder nach der Emulsionspolymerisation erfolgen kann, und bezogen auf das Monomerengemisch, 0,005 bis 1 Gew.-% wenigstens einer Wirksubstanz aus der Gruppe Glycerin, Pivalinsäure, Paraldehyd, 2,6-Di-tert.-butyl-p-kresol, Benzophenon, alkylsubstituierte Benzophenone, Thioschwefelsäure und ihre Salze, Oxalsäure und ihre Salze, Benzaldehyd, Derivate des Benzaldehyds, die am aromatishen Kern einen oder zwei C₁- bis C₄-Alkylreste aufweisen, Benzylalkohol, Campher, Ester aus Ameisensäure und C₃- bis C₆-Alkanolen, C₁₀- bis C₂₂-ungesättigte Fettsäuren, Tetraalkylorchosilicate mit 1 bis 4 C-Atome aufweisenden Alkylresten, Bis(4-hydroxyphenyl)sulfon und Zitronensäure zusetzt, wobei die Zugabe dieser Wirksubstanzen vor, während und/oder nach der Emulsionspolymerisation erfolgen kann.

## Claims

1. An aqueous polymer emulsion, obtainable by polymerizing a monomer mixture which contains from 10 to 100% by weight of halogen-containing monomers by the free radical emulsion polymerization method in an aqueous medium, bringing the pH of the aqueous phase of the resulting aqueous polymer emulsion to 5-10 by adding guanidine, the addition of the guanidine being effected before, during and/or after the emulsion polymerization, and adding from 0.005 to 1% by weight, based on the monomer mixture, of at least one active substance selected from the group consisting of glycerol, pivalic acid, paraldehyde, 2,6-di-tert-butyl-p-cresol, benzophenone, alkyl-substituted benzophenones, thiosulfuric acid and its salts, oxalic acid and its salts, benzaldehyde, derivatives of benzaldehyde which have one or two C₁-C₄-alkyl radicals on the aromatic nucleus, benzyl alcohol, camphor, esters of formic acid and C₃-C₆-alkanols, unsaturated C₁₀-C₂₂-fatty acids, tetraalkyl orthosilicates where the alkyl radicals are of 1 to 4 carbon atoms, bis(4-hydroxyphenyl) sulfone and citric acid, the addition of these active substances being effected before, during and/or after the emulsion polymerization.

## Revendications

1. Dispersions aqueuses de polymères, que l'on peut obtenir par le fait que l'on polymérise un mélange de monomères, qui contient 10 à 100% en poids de monomères halogénés, par la méthode de la polymérisation en émulsion radicalaire et en milieu aqueux, on règle la valeur du pH de la phase aqueuse de la dispersion aqueuse de polymères ainsi obtenu à 5 à 10 par l'addition de guanidine, où l'addition de la guanidine peut s'effectuer avant, pendant et/ou après la polymérisation en émulsion et, par rapport au mélange des monomères, on ajoute 0,005 à 1% en poids d'au moins une substance active appartenant au groupe formé par la glycérine, l'acide pivalique, le paraldéhyde, le 2,6-di-tert-butyl-p-crésol, la benzophénone, des benzophénones alkylsubstituées, l'acide thiosulfurique et ses sels, l'acide oxalique et ses sels, le benzaldéhyde, des dérivés du benzaldéhyde, qui présentent un ou deux radicaux alkyle en C₁ à C₄ sur le noyau aromatique, l'alcool benzylique, le camphre, des esters de l'acide formique et d'alcanols en C₃ à C₆, des acides gras insaturés en C₁₀ à C₂₂, des orthosilicates de tétraalkyle dont les radicaux alkyle présentent de 1 à 4 atomes de carbone, la bis(4-hydroxyphényl)sulfone et l'acide citrique, où l'addition de ces substances actives peut s'entreprendre avant, pendant et/ou après la polymérisation en émulsion.
